# EUROPEAN PATENT APPLICATION

(11) **EP 2 075 493 A2**
(43) Date of publication of application: **01.07.2009**
(21) Application number: 08254136.8
(22) Date of filing: 23.12.2008
(51) Int. Cl.: F16H 63/42

(54) **Vehicular gear shift indicator and gear shift indicating method**

(30) Priority: 27.12.2007 JP 2007337747
(71) Applicant: Toyota Jidosha Kabushiki Kaisha, Toyota-shi, Aichi-ken 471-8571 (JP)
(72) Inventor: Ito, Mitsuharu, Toyota-shi Aichi-ken, 471-8571 (JP); Wakamatsu, Taihei, Toyota-shi Aichi-ken, 471-8571 (JP)
(74) Representative: Albutt, Anthony John

(57) **Abstract**

A gear shift indicator, which gives a shift instruction to a driver when the current gear differs from a target gear, determines whether a vehicle is travelling on a congested road from the vehicle speed and the throttle opening amount and the like, as well as determines the frequency with which the driver shifts according to the shift instruction. When the road on which the vehicle is travelling is congested and the frequency with which the driver shifts according to the shift instruction is low, the gear shift indicator cancels the shift instruction even if the current gear differs from the target gear. As a result, the driver is not bothered by a shift instruction being given frequently while driving on a congested road.

## Description

### BACKGROUND OF THE INVENTION

### 1. Field of the Invention

The invention relates to a gear shift indicator and gear shift indicating method for instructing a driver to shift into a gear suitable for the running state of a vehicle. More particularly, the invention relates to an improvement for making a shift instruction more appropriate.

### 2. Description of the Related Art

In order to obtain the required running torque and vehicle speed, a transmission is used to change the rate of rotation that is input from an internal combustion engine and then output the changed rate of rotation to the wheels. However, the optimum gear for the running state is mainly determined by the vehicle speed and the engine load (e.g., the throttle opening amount) and the like. In a vehicle having an automatic transmission, for example, a shift map with shift lines (i.e., gear shifting lines) for obtaining the optimum gear according to the vehicle speed and the throttle opening amount is stored in a controller, and gear shifting operations are automatically performed according to this shift map.

However, because the driver sets the gear as he or she sees fit in a vehicle with a manual transmission, the gear selection and the timing of the shift operation differs greatly depending on the individual so it is very possible that the vehicle may be driven in a gear other than the optimum gear. For example, with an upshift, shifting into a gear lower than the optimum gear (i.e., to the low gear side) reduces fuel efficiency, while shifting into a gear higher than the optimum gear (i.e., to the high gear side) inhibits sufficient acceleration performance from being obtained.

To solve this kind of problem, Japanese Patent Application Publication No. 6-211069 (JP-A-6-211069), Japanese Patent Application Publication No. 5-256363 (JP-A-5-256363), and Japanese Patent Application Publication No. 2005-306242 (JP-A-2005-306242) propose a gear shift indicator (GSI) that instructs a driver to shift into the optimum gear obtained from the running state, such as the engine load and vehicle speed and the like, when a gear other than the optimum gear is selected.

More specifically, a shift map that is generally similar to the shift map in the automatic transmission described above is stored in a controller, and if the current gear set by the driver is different from the optimum gear obtained from the running state, the gear shift indicator visually instructs the driver to upshift or downshift according to the shift map. For example, a display portion for prompting an upshift or downshift of the gear of the transmission is provided in a combination meter in the vehicle cabin, and the gear shift indicator advises the driver to shift (i.e., change gears) by illuminating this display portion according to the running state. This kind of gear shift indicator is not limited to the manual transmission described above, i.e., it may also be applied to a vehicle provided with an automatic transmission having a manual shift function (i.e., a so-called sequential-shift transmission).

However, the gear shift indicator described above has the following problems.

When a vehicle provided with a gear shift indicator is travelling on a congested road, the vehicle speed changes within a low speed range over a relatively long period of time. For example, a running state in which the vehicle travels at 5 km/h for several seconds, then at 15 km/h for several seconds, and then at 5 km/h for several seconds again may be repeated. Under these conditions, the operating state of the vehicle may frequently cross upshift lines and downshift lines on the shift map, which would result in frequent upshifts (e.g., from 1st gear to 2nd gear) and downshifts (e.g., from 2nd gear to 1st gear) within a relatively short period of time, which may be irritating to the driver.

JP-A-6-211069 only proposes to prohibit a shift instruction from being given while cruise control is activated so that the driver is not bothered by a shift instruction while cruise control is activated.

### SUMMARY OF THE INVENTION

This invention thus provides a gear shift indicator and gear shift indicating method for indicating to the driver the gear of a transmission that is appropriate for the running state of the vehicle, in which the driver will not be bothered by a shift indication (i.e., a shift instruction) while travelling on a congested road.

A first aspect of the invention relates to a vehicular gear shift indicator which is used in a vehicle provided with a transmission capable of performing a manual shift, and gives a shift instruction to a driver to shift gears into an optimum gear when a shift instructing condition, in which the optimum gear of the transmission obtained according to the operating state of the vehicle differs from the gear selected by the driver, is satisfied. This gear shift indicator includes congestion determining means for determining whether a road on which the vehicle is travelling is congested, and shift instruction cancelling means for cancelling the shift instruction to the driver when the congestion determining means determines that the road is congested. It should be noted that in this specification, cancelling a shift instruction refers both to cancelling a shift instruction that has already been output, as well as prohibiting a shift instruction from being output before the shift instruction is output.

According to this aspect, when the vehicle is travelling on a congested road, the congestion determining means determines such. Also, when the vehicle is travelling on a congested road, it is determined that there is a good possibility that the driver may be bothered by a shift instruction from the gear shift indicator so the shift instruction from the gear shift indicator is forcibly cancelled (i.e., prohibited).

A second aspect of the invention relates to a vehicular gear shift indicator which is used in a vehicle provided with a transmission capable of performing a manual shift, and gives a shift instruction to a driver to shift gears into an optimum gear when a shift instructing condition, in which the optimum gear of the transmission obtained according to the operating state of the vehicle differs from the gear selected by the driver, is satisfied. This gear shift indicator includes congestion determining means for determining whether a road on which the vehicle is travelling is congested, shift frequency detecting means for detecting the frequency with which the driver shifts according to the shift instruction, and shift instruction cancelling means for cancelling the shift instruction to the driver when the congestion determining means determines that the road is congested and the shift frequency determining means determines that the frequency with which the driver shifts according to the shift instruction is equal to or less than a predetermined frequency.

According to this aspect, when the vehicle is travelling on a congested road, the congestion determining means determines such. Also, the shift frequency determining means determines the frequency with which the driver shifts according to the shift instruction from the gear shift indicator. A relatively high frequency indicates that the driver intends to shift according to the shift instruction from the gear shift indicator so the shift instruction from the gear shift indicator continues to be output when the shift instructing condition is satisfied (i.e., when the optimum gear is different from the gear selected by the driver). On the other hand, when the frequency with which the driver shifts according to the shift instruction from the gear shift indicator is relatively low or zero, it indicates that the driver has no intention of shifting according to the shift instruction from the gear shift indicator so it is highly likely that the shift instruction is bothersome to the driver and is pointless. Therefore, in this kind of situation, the shift instruction from the gear shift indicator is forcibly cancelled (i.e., prohibited) even if the shift instructing condition is satisfied.

In this way, when the driver has no intention of shifting according to a shift instruction when travelling on a congested road, the shift instruction is cancelled so that it will not bother the driver.

In the second aspect, the gear shift indicator may also include shift number determining means for determining the number of times the driver shifts. The shift instruction cancelling means may cancel the shift instruction to the driver when the shift number determining means determines that the number of times the driver shifts is equal to or less than a predetermined number when the congestion determining means determines that the road is congested and the shift frequency determining means determines that the frequency with which the driver shifts according to the shift instruction is equal to or greater than a predetermined frequency.

In the second aspect, a specific example of the timing at which the congestion determining means determines whether the road is congested and the timing at which the shift frequency determining means determines the frequency with which the driver performs a shift is as follows. That is, the congestion determining means may determine whether the road is congested during a predetermined first period, and the shift frequency determining means may determine the frequency with which the driver shifts according to the shift instruction during a predetermined second period. These determinations (i.e., the determination of which the road is congested, which is made by the congestion determining means, and the determination of the frequency with which the driver shifts according to the shift instruction, which is made by the shift frequency determining means) may be made simultaneously.

According to this structure, whether to cancel the shift instruction to the driver can be determined quickly. That is, if the operation to determine the frequency with which the driver shifts according to the shift instruction is started after it has been determined by the congestion determining means that there is traffic congestion, it will take a long time until both of these operations end, and supposing that there is traffic congestion and the frequency with which the driver shifts according to the shift instruction is low, the shift instruction will continue to be given to the driver until these determination operations end, during which time it may be bothersome to the driver. According to this structure, the determination by the congestion determining means and the determination by the shift frequency determining means are made simultaneously (i.e., in parallel) so it takes less time to determine whether the shift instruction should be cancelled. Thus, even if the shift instruction should be cancelled, the shift instruction is continuously given for only a short period of time so that it weighs less on the driver's mind.

A variety of specific examples of the congestion determination made by the congestion determining means in the aspects described above are as follows. First, the road may be determined to be congested based on one or a plurality of pieces of information, from among information relating to the running speed of the vehicle, the number of times the vehicle stops, the operating amount of a brake by the driver, the operating amount of a clutch by the driver, and the operating amount of an accelerator by the driver, during a predetermined period.

For example, the congestion determining means may determine that the road is congested when the accelerator operating amount (i.e., the throttle opening amount) continues to be relatively low (e.g., an amount of change in the throttle opening amount of 10% or less) for a predetermined period of time (such as 20 seconds) or more while the running speed of the vehicle is relatively low (such as 15 km/h or less) and the vehicle is not stopped. Also, the congestion determining means may determine that the road is congested when the running speed of the vehicle continues to be equal to or less than a predetermined speed (such as 30 km/h) and the number of times the vehicle stops within a predetermined period of time exceeds a predetermined number (such as when the vehicle is repeatedly stopped and then started again four or more times within 60 seconds). Also, the congestion determining means may determine that the road is congested when the number of times the brake or clutch is operated within a predetermined period of time is equal to or greater than a predetermined number (such as when the brake or clutch is operated four or more times within 60 seconds) while the running speed of the vehicle is relatively low (such as 15 km/h or less) and the vehicle is not stopped. In this case, depressing the brake pedal once and then releasing the brake pedal once together count as one brake operation. Similarly, depressing the clutch pedal once and then releasing the clutch pedal once together count as one clutch operation.

Also, in the aspects described above, the road may be determined to be congested based on information relating to the running speed of the vehicle and information relating to the distance between the vehicle and a vehicle in front of the vehicle.

Specific examples of means for obtaining information relating to the distance between the vehicle and a vehicle in front of the vehicle include measuring the vehicle-to-vehicle distance using millimetre wave radar. That is, the congestion determining means may determine that the road is congested when the distance between the vehicle and a vehicle in front of the vehicle continues to be equal to or less than a predetermined distance (such as 30 metres) for a predetermined duration of time (such as 20 consecutive seconds) or longer while the running speed of the vehicle is relatively low (such as 30 km/h or less) and the vehicle is not stopped.

Also in the aspects described above, the road may be determined to be congested based on information relating to the running speed of the vehicle and information relating to a captured image of an area in front of or behind the vehicle which is obtained by on-board imaging means.

One example of the on-board imaging means is an on-board camera (such as a CCD camera). This on-board camera may determine the number of vehicles around the vehicle. That is, the congestion determining means may determine that the road is congested when the number of vehicles around the vehicle is equal to or greater than a predetermined number (such as when there are five or more vehicles within 100 metres in front of the vehicle and five or more vehicles within 100 metres in back of the vehicle) while the running speed of the vehicle is relatively low (such as 30 km/h or less) and the vehicle is not stopped.

Furthermore, in the aspects described above, the congestion determining means may determine that the road is congested based on traffic information received from outside the vehicle. The congestion determining means may be able to receive traffic information transmitted from a traffic information transmitting source, and determine that the road is congested based on this traffic information.

In Japan, for example, the congestion determining means may
determine whether the road is congested by receiving traffic information from traffic information and communication systems such as VICS (vehicle Information and Communication System, registered trademark) and G-BOOK (registered trademark).

Also, in the aspects described above, an example of a structure for giving the shift instruction to the driver again (i.e., restoring the shift instruction) after it has been cancelled by the shift instruction cancelling means is as follows. That is, the shift instruction may be given to the driver again when the congestion determining means determines that the road is no longer congested and the shift instructing condition is satisfied. In this case, the condition for determining that the road is no longer congested may be, for example, that the speed of the vehicle be equal to or greater than a predetermined value (such as 30 km/h) or the throttle opening amount be equal to or greater than a predetermined value (such as 30%).

According to this aspect, when the road is no longer congested and the vehicle accelerates and starts to travel at cruising speed, the shift instruction from the gear shift indicator is again given to the driver when the shift instructing condition is satisfied. Accordingly, the driver can be instructed to shift into the optimum gear obtained from the engine load and the vehicle speed and the like. As a result, the vehicle can be operated in a gear which enables better fuel efficiency and sufficient acceleration performance to be obtained.

According to the aspects described above, the shift instruction from the gear shift indicator is forcibly prohibited when the vehicle is travelling on a congested road, or when travelling on this congested road, it is determined whether the driver of the vehicle intends to shift according to a shift instruction from the gear shift indicator, and the shift instruction from the gear shift indicator is forcibly prohibited only when it is determined that the driver has no such intention.

A third aspect of the invention relates to a vehicular gear shift indicating method which is used in a vehicle provided with a transmission capable of performing a manual shift, and gives a shift instruction to a driver to shift gears into an optimum gear when a shift instructing condition, in which the optimum gear of the transmission obtained according to the operating state of the vehicle differs from the gear selected by the driver, is satisfied. This gear shift indicating method includes determining whether a road on which the vehicle is travelling is congested, and cancelling the shift instruction to the driver when it is determined that the road is congested.

A fourth aspect of the invention relates to a vehicular gear shift indicating method which is used in a vehicle provided with a transmission capable of performing a manual shift, and gives a shift instruction to a driver to shift gears into an optimum gear when a shift instructing condition, in which the optimum gear of the transmission obtained according to the operating state of the vehicle differs from the gear selected by the driver, is satisfied. This gear shift indicating method includes determining whether a road on which the vehicle is travelling is congested, detecting the frequency with which the driver shifts according to the shift instruction, and cancelling the shift instruction to the driver when it is determined that the road is congested and it is determined that the frequency with which the driver shifts according to the shift instruction is equal to or less than a predetermined frequency.

A fifth aspect of the invention relates to a vehicular gear shift indicator which is used in a vehicle provided with a transmission capable of performing a manual shift, and gives a shift instruction to a driver to shift gears into an optimum gear when a shift instructing condition, in which the optimum gear of the transmission obtained according to the operating state of the vehicle differs from the gear selected by the driver, is satisfied. This gear shift indicator includes vehicle speed determining means for determining the speed of the vehicle, and shift instruction cancelling means for cancelling the shift instruction to the driver when the vehicle speed determining means that the vehicle speed is equal to or less than a predetermined speed.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG 1 is a side view of a vehicle according to example embodiments of the invention;
FIG 2 is an enlarged front view of a combination meter;
FIG 3 is a block diagram schematically showing the structure of a control system that includes a control apparatus;
FIG 4 is a view of a shift map;
FIG 5 is a view of a gear estimating map;
FIG 6A is a view showing the illuminated state of an upshift lamp and the display state of a display in the case of an upshift;
FIG 6B is a view showing the illuminated state of a downshift lamp and the display state of a display in the case of a downshift; and
FIG 7 is a flowchart illustrating a routine for an operation to switch the gear instruction on and off.

### DETAILED DESCRIPTION OF EMBODIMENTS

Example embodiments of the invention will be described below with reference to the accompanying drawings. In these example embodiments, a case will be described in which the invention is applied to a vehicle provided with a manual transmission capable of shifting into five forward gears and one reverse gear.

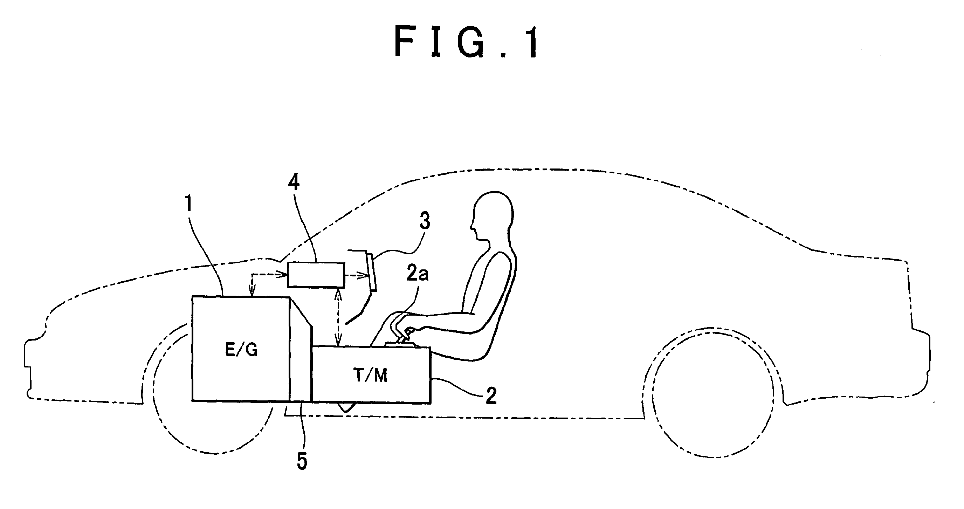

- First example embodiment - FIG 1 is a side view of a vehicle which shows the layout arrangement of an internal combustion engine 1, a clutch mechanism 5, a manual transmission 2, a combination meter 3, and a control apparatus 4. The vehicle body is indicated by the alternate long and two short dotted line.

The clutch mechanism 5 is released (disengaged) by a driver depressing a clutch pedal and applied (engaged) by the driver releasing (i.e., letting up on) the clutch pedal. When the clutch mechanism 5 is applied, driving force from the engine 1 is transmitted to the manual transmission 2. When the clutch mechanism 5 is released, the transmission of driving force from the engine 1 to the manual transmission 2 is interrupted.

The manual transmission 2 is designed to establish five forward gears and one reverse gear. A shift lever 2a used by the driver to perform a manual shift operation is arranged protruding into the vehicle cabin.

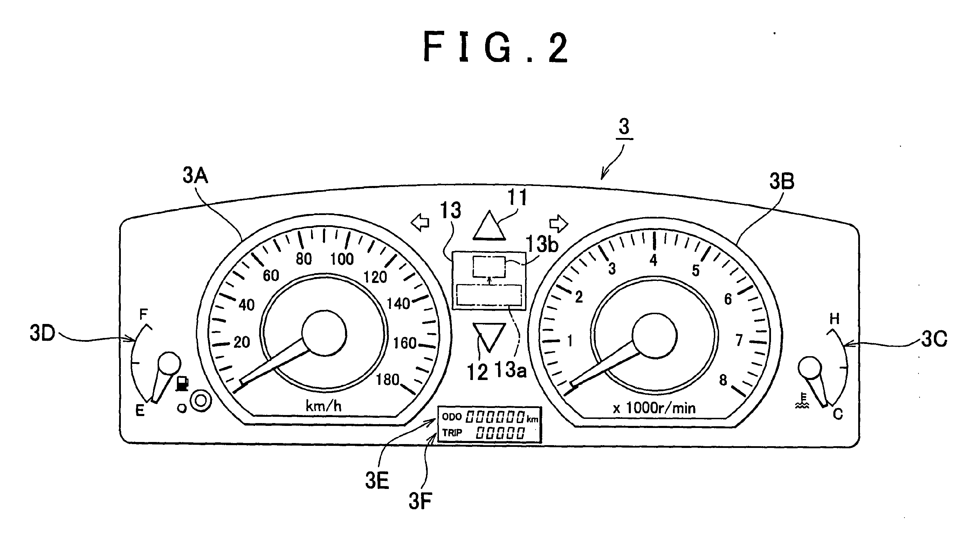

The combination meter 3 is arranged on a dashboard in front of the driver in the vehicle cabin and includes, for example, a speedometer 3A, a tachometer 3B, a water temperature gauge 3C, a fuel gauge 3D, an odometer 3E, a trip meter 3F and the like, as well as a variety of warning indicator lamps (not shown) and the like, as shown in FIG 2.

The vehicle according to this example embodiment is provided with a gear shift indicator (GSI) (i.e., a driving advice system) that indicates a gear selection of the manual transmission 2 suitable for improving fuel efficiency and the like according to the running state of the vehicle. This gear shift indicator will now be described.

First, the combination meter 3 has, as display portions for instructing the driver to shift, an upshift lamp 11 that illuminates when the gear of the manual transmission 2 needs to be upshifted, a downshift lamp 12 which illuminates when the gear of the manual transmission 2 needs to be downshifted, and a liquid crystal or seven-segment display 13 that displays various numerals and characters and the like.

The lamps 11 and 12 are formed of LEDs, for example, and are illuminated as necessary. Alternatively, however, they may also be made to flash or blink. Also, two or more types of luminous bodies may be embedded in the lamps 11 and 12 to enable them to emit light of a plurality of colours, with each emission colour having a different meaning. Moreover, instead of these lamps 11 and 12, voice or sound or the like may also be used to prompt the driver to shift.

Also, the display 13 includes, for example, a current gear display portion 13a which displays, using numbers or characters, the current gear of the manual transmission 2 (hereinafter simply referred to as the "current gear"), and a target gear display portion 13b which displays, also using numbers or characters, the target gear of the manual transmission 2 (hereinafter simply referred to as the "target gear"). In this example embodiment, the display of the target gear on the target gear display portion 13b is made to blink, and the display of the current gear in the current gear display portion 13a is made not to blink.

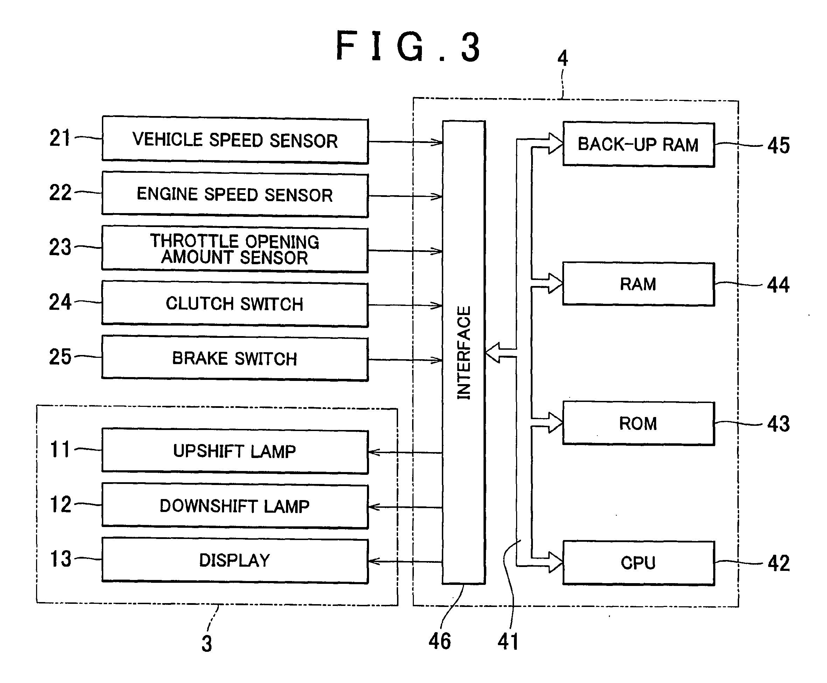

A control apparatus 4 is formed of an ECU (Electronic Control Unit) that is typically well known and includes, for example, a CPU 42, ROM 43, RAM 44, backup RAM 45, and an interface 46, and the like, all of which are connected to one another by a bidirectional bus 41, as shown in FIG 3.

Incidentally, the CPU 42 ascertains the running state of the vehicle based on signals that are output from various sensors (such as a vehicle speed sensor 21, an engine speed sensor 22, and a throttle opening amount sensor 23 and the like) and received via the interface 46, and controls the quantity of fuel (i.e., the fuel injection quantity) injected by fuel injectors (i.e., fuel injection valves), the opening and closing timing of intake and exhaust valves, and the ignition timing of spark plugs, and the like as necessary. Also, a clutch switch 24 which turns on when the clutch pedal is depressed (i.e., when the clutch mechanism 5 is released) is provided. The CPU 42 also receives the on/off signal from this clutch switch 24 via the interface 46. Furthermore, a brake switch 25 which turns on when a brake pedal is depressed is also provided. The CPU 42 also receives the on/off signal from this brake switch 25 via the interface 46.

Also, various programmes are stored in the ROM 43. These programmes are used to execute not only control related to the basic operation of the vehicle, but also to at least execute shift instructing control for indicating a target gear selection of the manual transmission 2 suitable for improving fuel efficiency and the like according to the running state of the vehicle, and the like. The specific details of this shift instructing control will be described later.

The RAM 44 is memory for temporarily storing calculation results from the CPU 42 and data and the like input from the various sensors. The backup RAM 45 is nonvolatile memory for storing various data that needs to be saved.

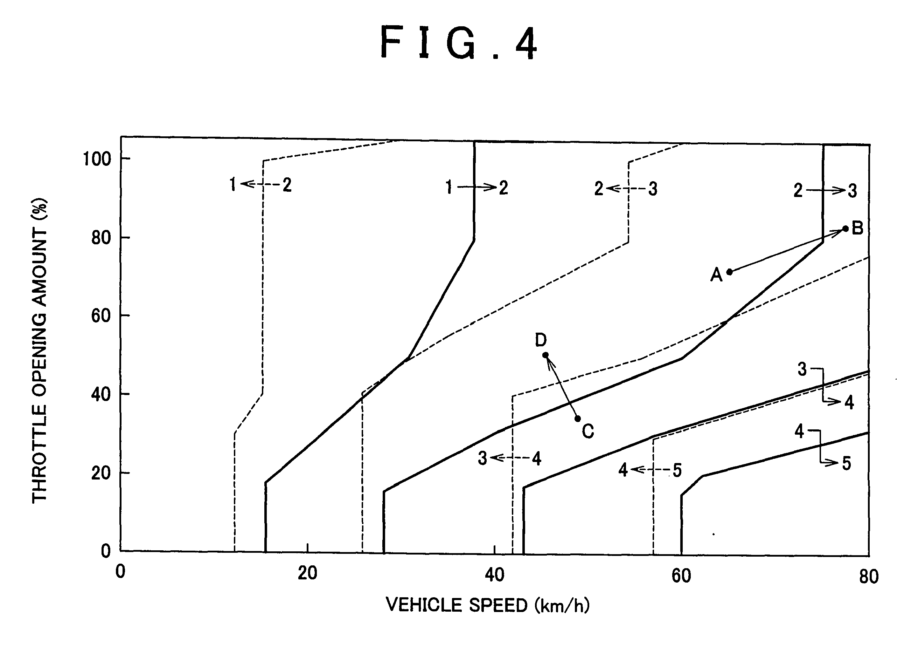

Also, a control map used in the shift instructing control is also stored in the ROM 43. This control map is a shift map (see FIG 4) having shift lines (gear shifting lines) for obtaining the optimum gear for the vehicle speed and throttle opening amount. The optimum gear for the running state of the vehicle is obtained according to this shift map, and if the gear (i.e., the current gear) set by the driver differs from the obtained gear (i.e., the target gear), a shift instructing condition is satisfied so a shift instruction is given by the lamps 11 and 12 and the target gear display portion 13b of the display 13.

In this way, the upshift lamp 11, and the downshift lamp 12, and the display 13, as the display portions for instructing the driver to shift, together with the control apparatus 4 make up the gear shift indicator.

Now the shift map will be described. This shift map has a plurality of shift lines, as shown by the example in FIG 4. In this example, the shift lines used during an upshift into a higher gear are indicated by the solid lines and the shift lines used during a downshift into a lower gear are indicated by the broken lines. Also, the direction of the upshift and downshift is indicated by numbers and an arrow in the drawing.

As is evident from FIG 4, the shift lines used during an upshift are such that when the throttle opening amount is small, the gear increases even if the vehicle speed is relatively low. For example, the shift lines are set such that when the throttle opening amount is maintained at 20% after the vehicle takes off from a standstill, there will be a demand to shift from 1st gear to 2nd gear when the vehicle speed reaches approximately 15 km/h. Then when the vehicle speed reaches approximately 30 km/h, there will be a demand to shift from 2nd gear to 3rd gear, and when the vehicle speed reaches approximately 45 km/h, there will be a demand to shift from 3rd gear to 4th gear. Then when the vehicle speed reaches approximately 60 km/h, there will be a demand to shift from 4th gear to 5th gear. This is because when the throttle opening amount is small it can be determined that the driver is not requiring sudden acceleration, so in this case fuel efficiency is improved by using a higher gear. Therefore, in the region on the shift map where the throttle opening amount is small, the intervals between shift lines are narrower.

On the other hand, in this shift map, when the throttle opening amount is large, the gear will not be shifted until the vehicle speed becomes relatively high. For example, the shift lines are set such that when the throttle opening amount is maintained at 80% after the vehicle takes off from a standstill, there will not be a demand to shift from 1st gear to 2nd gear until the vehicle speed reaches approximately 38 km/h. The next demand to shift, i.e., the demand to shift from 2nd gear to 3rd gear, will not be until the vehicle reaches approximately 75 km/h. This is because it can be determined by the large throttle opening amount that the driver requires sudden acceleration, and this requirement can be met by maintaining a lower gear. Therefore, in the region on the shift map where the throttle opening amount is large, the intervals between shift lines are wider.

Similarly, with the shift lines used during a downshift as well, the intervals between shift lines are narrower in the region where the throttle opening amount is smaller, and wider where the throttle opening amount is larger.

In order for the gear shift indicator described above to be able to give a shift instruction, the current gear must be compared with the target gear obtained from the shift map. That is, an instruction to upshift (i.e., an upshift instruction or upshift indication) is given when the current gear is lower than the target gear, and an instruction to downshift (i.e., a downshift instruction or downshift indication) is given when the current gear is higher than the target gear.

Therefore, the gear shift indicator must be provided with a structure capable of determining the current gear. In the first example embodiment, one way of being able to determine the current gear without providing a gear sensor is to estimate the current gear based on the engine speed and the vehicle speed. It is also possible to provide a gear sensor and determine the current gear using the output from this sensor.

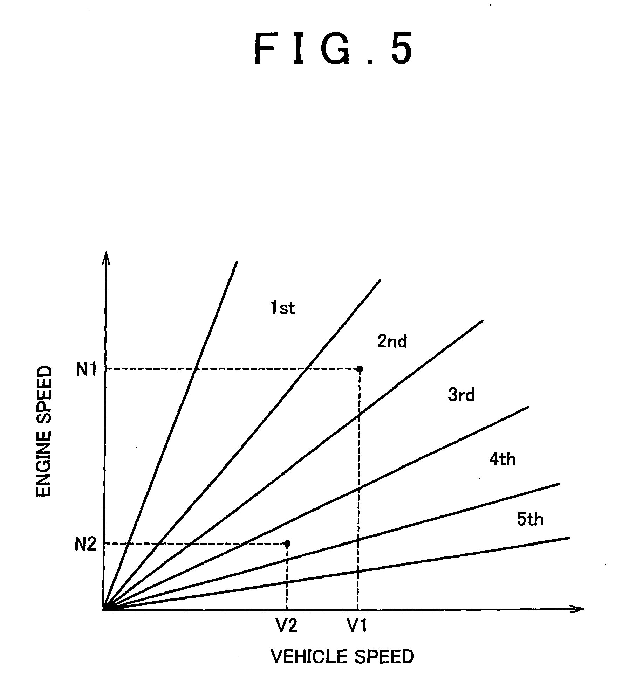

FIG 5 is one example of a gear estimating map for estimating the current gear. The current gear is estimated by applying information regarding the engine speed detected by the engine speed sensor 22 and information regarding the vehicle speed detected by the vehicle speed sensor 21 to this gear estimating map. For example, in the drawing, when the engine speed is N1 and the vehicle speed is V1, it is estimated that the manual transmission 2 is in 2nd (i.e., second gear). Also, when the engine speed is N2 and the vehicle speed is V2, it is estimated that the manual transmission 2 is in 4th (i.e., fourth gear). Incidentally, this gear estimating map is stored in the ROM 43.

Incidentally, in the description above, the current gear is estimated by applying engine speed information and vehicle speed information to the gear estimating map. Alternatively, however, the current gear may also be obtained from an operational expression that uses the engine speed and the vehicle speed.

Next, the basic operation of shift indication of the gear shift indicator will be described.

The control apparatus 4 determines the current gear estimated by applying the engine speed information and the vehicle speed information to the gear estimating map, and displays the number of the corresponding gear on the current gear display portion 13a of the display 13.

Then as shift instructing control executed by the control apparatus 4, the control apparatus 4 ascertains the running state of the vehicle based on the signals output from the vehicle speed sensor 21 and the throttle opening amount sensor 23, reads the gear (i.e., the optimum gear) for running which is preferable for improving fuel efficiency and the like from the shift map (FIG 4), and determines whether a shift is necessary.

If a shift is not necessary, i.e., if it is preferable to maintain the current state (that is, when the current gear is appropriate), both the upshift lamp 11 and the downshift lamp 12 are turned off and nothing is displayed in the target gear display portion 13b.

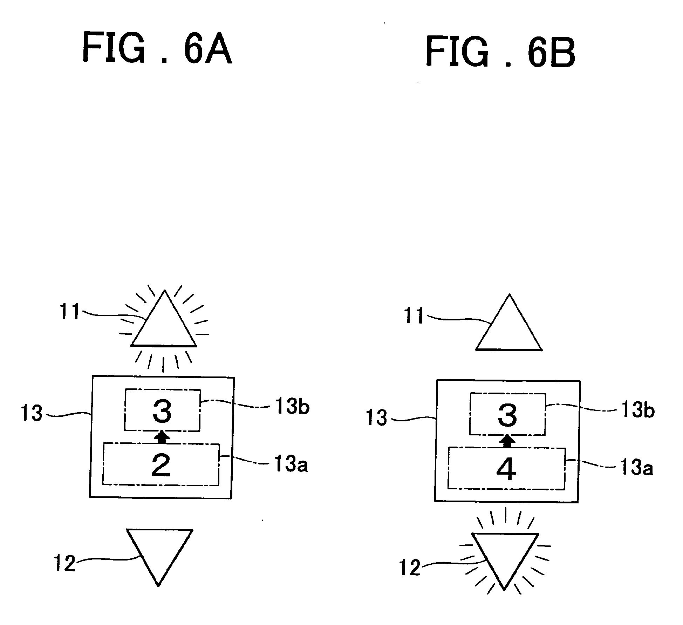

Also, if it is preferable to shift gears and an upshift is required, the upshift lamp 11 is illuminated and the target gear is displayed in the target gear display portion 13b, as shown in FIG 6A. In FIG 6A, the current gear is 2nd gear and the target gear is 3rd gear. This display would appear when the operating state of the vehicle changes from point A to point B in FIG 4 while the current gear of the manual transmission 2 is 2nd gear (i.e., while the engine speed is N1 and the vehicle speed is V1 in FIG 5), for example.

On the other hand, if it is preferable to shift gears and a downshift is required, the downshift lamp 12 is illuminated and the target gear is displayed in the target gear display portion 13b, as shown in FIG 6B. In FIG 6B, the current gear is 4th gear and the target gear is 3rd gear. This display would appear when the operating state of the vehicle changes from point C to point D in FIG 4 while the current gear of the manual transmission 2 is 4th gear (i.e., while the engine speed is N2 and the vehicle speed is V2 in FIG 5), for example.

When the driver shifts into the appropriate gear according to the indication (i.e., the instruction), that instruction is cancelled (i.e., the lamp 11 or 12 is turned off and the display of the target gear display portion 13b is no longer displayed). The lamp 11 or 12 may continue to be illuminated and the target gear display portion 13b may continue to display the target gear until the driver shifts into the appropriate gear, or the lamp 11 or 12 may be turned off and the display cancelled if the driver does not shift before a predetermined period of time has passed.

A characteristic of this example embodiment is switching the shift instruction on and off according to the running state of the vehicle and the shift operation by the driver. More specifically, the shift instruction is turned off (i.e., the lamps 11 and 12 are turned off and nothing is displayed in the target gear display portion 13b) only when the road on which the vehicle is travelling is congested and the frequency with which the driver shifts according to a shift instruction by the gear shift indicator is low.

Also, in order to determine whether the road is congested, the CPU 42 receives signals output from the vehicle speed sensor 21, the throttle opening amount sensor 23, the clutch switch 24, and the brake switch 25. Upon receiving these signals, the CPU 42 obtains i) the number of times that the vehicle stops within a predetermined period of time based on output signals from the vehicle speed sensor 21, ii) the amount of change in the throttle opening amount within a predetermined period of time based on output signals from the throttle opening amount sensor 23, iii) the number of times the clutch pedal is depressed within a predetermined period of time based on output signals from the clutch switch 24, and iv) the number of times the brake pedal is depressed within a predetermined period of time based on output signals from the brake switch 25. The results are stored in the RAM 44.

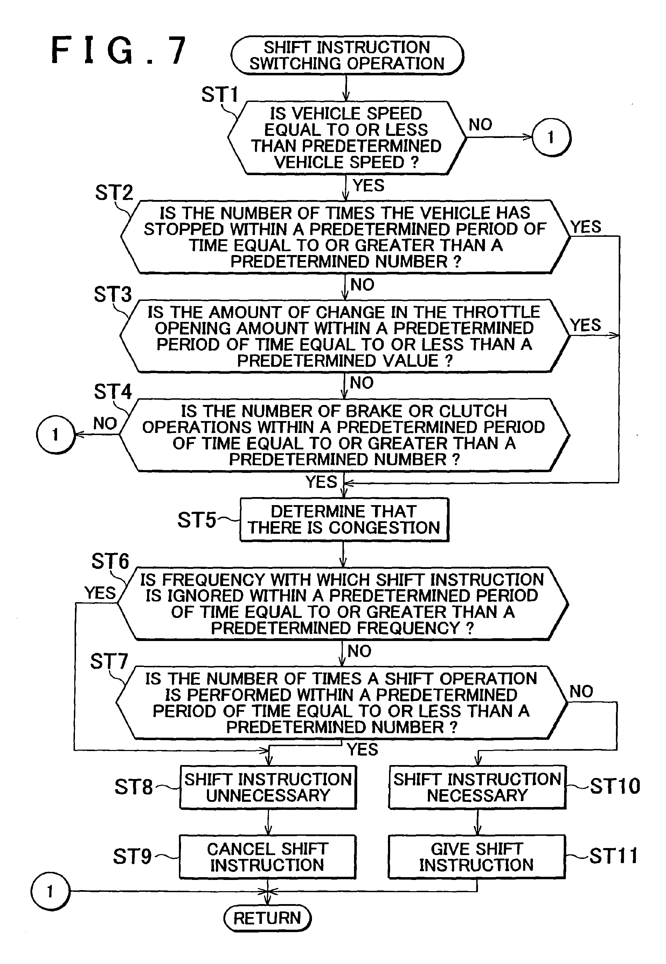

The operation for switching the shift instruction on and off will now be described with reference to the flowchart shown in FIG. 7. The routine shown in FIG. 7 is executed at predetermined intervals of time, such as every several milliseconds, after the engine is started. Also, the routine may be also executed by the control apparatus 4 every time a predetermined crank angle is reached.

First, in step ST1 it is determined whether the current vehicle speed is equal to or less than a predetermined vehicle speed, such as 15 km/h, for example. If the vehicle speed is greater than the predetermined vehicle speed such that the determination in step ST1 is No, it is determined that the road on which the vehicle is travelling is not congested and this cycle of the routine ends.

If, on the other hand, the vehicle speed is equal to or less than the predetermined vehicle speed, the determination in step ST1 is Yes and the process proceeds on to step ST2. In step ST2 it is determined whether the number of times the vehicle has stopped in a predetermined period of time is equal to or greater than a predetermined number of times. For example, it is determined whether the vehicle is repeatedly stopped and started four or more times within 60 seconds (for example, whether the vehicle has repeatedly come to a stop and then started again from a standstill four or more times within the last 60 seconds). If the number of times the vehicle has stopped within this predetermined period of time is equal to or greater than the predetermined number, the determination in step ST2 is Yes and the process jumps ahead to step ST5 where it is determined that the road on which the vehicle is travelling is congested. That is, it is determined that there is traffic congestion based on the fact that the vehicle stops frequently and the fact that the vehicle speed is low.

If the number of times the vehicle stops within the predetermined period of time is less than the predetermined number, the determination in step ST2 is No and the process proceeds on to step ST3 where it is determined whether a change in the throttle opening amount within the predetermined period of time is equal to or less than a predetermined value. For example, it is determined whether the amount of change in the throttle opening amount is continually 10% or less for 20 seconds (e.g., whether the amount of change in the throttle opening amount has continued to be 10% or less for the last 20 seconds). If the amount of change in the throttle opening amount within this predetermined period of time is equal to or less than the predetermined value, then the determination in step ST3 is Yes and the process jumps ahead to step ST5 where it is determined that the road on which the vehicle is travelling is congested. That is, it is determined that there is traffic congestion based on the fact that the throttle opening amount continues to be small and the fact that the vehicle speed is low.

If the amount of change in the throttle opening amount within the predetermined period of time exceeds the predetermined amount, the determination in step ST3 is No and the process proceeds on to step ST4 where it is determined whether the number of times the brake or clutch is operated within a predetermined period of time is equal to or greater than a predetermined number. For example, it is determined whether the brake or clutch is operated four or more times within 60 seconds (e.g., whether the brake or clutch has been operated four or more times within the last 60 seconds). If the number of times the brake or clutch is operated in the predetermined period of time is equal to or greater than the predetermined number, the determination in step ST4 is Yes and the process proceeds on to step ST5 where it is determined that the road on which the vehicle is travelling is congested. That is, it is determined that there is traffic congestion based on the fact that a brake or clutch operation is frequently repeated and the vehicle speed is low.

Also, if the number of times the brake or clutch is operated within the predetermined period of time is less than the predetermined number, the determination in step ST4 is No and it is determined that there is no traffic congestion, after which this cycle of the routine ends.

An operation to determine whether there is traffic congestion using congestion determining means will now be described.

Incidentally, the values for determining whether there is traffic congestion (i.e., the predetermined period of time, the vehicle speed, the number of times the vehicle stops, the throttle opening amount, the number of times the brake is operated, and the number of times the clutch is operated) are not limited to these, and may be set appropriately.

In this way, if the determination in any one of steps ST2, ST3, or ST4 is Yes such that it is determined in step ST5 that there is traffic congestion, the process then proceeds on to step ST6.

In step ST6 it is determined whether the frequency with which the driver ignores a shift instruction by the gear shift indicator within a predetermined period of time (i.e., the frequency with which a shift is not performed following a shift instruction) is equal to or greater than a predetermined frequency.

More specifically, it is determined whether, despite of the fact that the target gear is different from the current gear and a shift instruction is made by the lamp 11 or 12 and the target gear display portion 13b, the frequency with which the driver does not shift according to that shift instruction (i.e., the ratio of the number of times a shift instruction is made to the number of times a shift operation following that shift instruction is not performed) exceeds 70% in two minutes (that is, a shift frequency determining operation is performed by shift frequency determining means). Also, it is determined that the driver has not followed a shift instruction (i.e., has ignored a shift instruction) when, for example, he or she does not shift according to a shift instruction within 10 seconds after the shift instruction is given by the lamp 11 or 12 and the target gear position display portion 13b.

If the frequency with which a shift instruction is ignored within the predetermined period of time is equal to or greater than the predetermined frequency, the determination in step ST6 is Yes and the process jumps ahead to step ST8 where it is determined that the shift instruction is not necessary. Then in step ST9 the shift instruction from the gear shift indicator is cancelled (i.e., the lamp 11 or 12 is turned off and nothing is displayed in the target gear position display portion 13b). That is, it is determined that the driver has no intention of following the shift instruction and may be bothered by its being displayed so the shift instruction by the gear shift indicator is cancelled (that is, a shift instruction cancelling operation is performed by shift instruction cancelling means).

If, on the other hand, the frequency with which the shift instruction in the predetermined period of time is less than the predetermined frequency, the determination in step ST6 is No and the process proceeds on to step ST7 where it is determined whether the number of times a shift is performed within a predetermined period of time is equal to or less than a predetermined number. If the number of times a shift is performed within the predetermined period of time is equal to or less than the predetermined number, the determination in step ST7 is Yes and the process proceeds on to step ST8 where it is determined that the shift instruction is unnecessary, after which the shift instruction by the gear shift indicator is cancelled (i.e., the lamp 11 or 12 is turned off and nothing is displayed in the target gear position display portion 13b) in step ST9, just as described above.

Also, if the number of times a shift is performed within the predetermined period of time exceeds the predetermined number, the determination in step ST7 is No, in which case it is determined that the driver intends to follow the shift instruction, and the process proceeds on to step ST10 where it is determined that the shift instruction is necessary so the shift instruction by the gear shift indicator is given in step ST11.

Incidentally, after the shift instruction by the gear shift indicator has been cancelled in steps ST8 and ST9, it is given again (i.e., restored or reintroduced) when the vehicle speed detected by the vehicle speed sensor 21 is equal to or greater than a predetermined vehicle speed (i.e., a vehicle speed at which it can be determined that the road is no longer congested, such as 30 km/h), or when the throttle opening amount detected by the throttle opening amount sensor 23 is equal to or greater than a predetermined opening amount (i.e., an opening amount corresponding to an accelerator depression amount when the road is no longer congested, such as a throttle opening amount of 30%).

As described above, in this example embodiment, it is determined whether the driver of the vehicle intends to shift according to the shift instruction from the gear shift indicator when the vehicle is travelling on a congested road, and if the driver has no such intention, that shift instruction by the gear shift indicator is cancelled. Therefore, when the driver has no intention of shifting according to the shift instruction, that shift instruction is cancelled so that it will not annoy the driver, thus making the gear shift indicator more practical.

Also, in this example embodiment, the determination as to whether the road is congested and the determination of the frequency with which the driver shifts according to the shift instruction may be made simultaneously. That is, when the operation to determine whether there is traffic congestion is made in steps ST1 to ST5, the operation to obtain the frequency with which the driver has ignored the shift instruction may be performed in parallel, such that after it has been determined that there is traffic congestion (step ST5), the frequency with which the driver shifts is already known as a result of having carried out the operation in step ST6 and ST7 in parallel with the operation in steps ST1 to ST5. This enables the determination as to whether to cancel the shift instruction to the driver to be made quickly. That is, if the operation to determine the frequency with which the driver shifts according to the shift instruction is started after it has been determined that there is traffic congestion, it will take a long time until both of these operations end, and supposing that there is traffic congestion and the frequency with which the driver shifts according to the shift instruction is low, the shift instruction will continue to be given to the driver until these determination operations end.

- Second example embodiment - In the example embodiment described above, it is determined whether the driver of the vehicle intends to shift according to the shift instruction from the gear shift indicator if the vehicle is travelling on a congested road, and the shift instruction by the gear shift indicator is forcibly prohibited from being given only when the driver has no intention to shift according to the shift instruction.

In this second example embodiment, it is determined whether the vehicle is travelling on a congested road, and when it is determined that the road is congested, the control apparatus 4 forcibly prohibits the shift instruction from being given by the gear shift indicator. That is, if the vehicle is travelling on a congested road, the shift instruction is forcibly prohibited from being given without first determining whether the driver intends to shift according to the shift instruction from the gear shift indicator.

Therefore, as the operation for switching the shift instruction on and off in this example embodiment, it is determined whether the road on which the vehicle is travelling is congested by the same operation as the operation of steps ST1 to ST5 in the flowchart in FIG 7 of the first example embodiment.

Then, if it is determined that there is traffic congestion, the same operation as the operation of steps ST8 and ST9 in the flowchart in FIG. 7 is performed, in which it is determined that the shift instruction is not necessary and the shift instruction by the gear shift indicator is cancelled (i.e., the lamp 11 or 12 is turned off and nothing is displayed in the target gear display portion 13b).

If, on the other hand, it is determined that the road is not congested, the same operation as the operation of steps ST10 and ST11 in the flowchart in FIG 7 is performed, in which it is determined that the shift instruction is necessary and the shift instruction from the gear shift indicator is given (i.e., turned on).

The operation in this example embodiment obviates the need to determine whether the driver intends to shift according to the shift instruction from the gear shift indicator. Therefore, the determination as to whether the shift instruction is necessary can be made in a short period of time and the method for making that determination can also be simplified.

That is, in order to determine whether the driver intends to shift according to the shift instruction from the gear shift indicator, a shift instructing condition must be satisfied a plurality of times and the control apparatus 4 must detect a shift each time. When the vehicle is travelling on a congested road at a constant speed and with a constant throttle opening amount, there is a possibility that it will take a long time to confirm the intention of the driver. In this example embodiment, the intention of the driver is not confirmed so the determination as to whether the shift instruction is necessary can be made quickly.

- Other example embodiments for determining congestion - In the example embodiments described above, traffic congestion is determined based on various information including the vehicle speed, the number of times the vehicle stops, and the operation amounts of the brake, the clutch, and the accelerator by the driver. Alternatively, however, the determination as to whether there is traffic congestion can be made as follows.

First, the vehicle can be equipped with a radar emitting apparatus and it can be determined whether there is traffic congestion by measuring the distance from the vehicle to a preceding vehicle using millimetre-wave radar emitted from this radar emitting apparatus. This radar emitting apparatus emits a millimetre-wave signal ahead of the vehicle, and receives millimetre waves that have reflected off of objects in their path, and then outputs a detection signal indicative of the presence of an object, the size of the object, and the distance to the object, and the like (such technology is described in Japanese Patent Application Publication No. 2005-271756 (JP-A-2005-271756), for example). The detection signal is received by the control apparatus 4 which then determines whether there is traffic congestion by determining the distance to the preceding vehicle and the period of time during which this vehicle-to-vehicle distance continues to be maintained.

More specifically, it can be determined that there is traffic congestion when the distance from the vehicle to the preceding vehicle remains equal to or less than a predetermined distance (such as 30 metres or less) for a predetermined duration (such as 20 seconds or more continuously) while the travelling speed of the vehicle is relatively low (e.g., 30 km/h or less) and the vehicle is not stopped. The predetermined distance, the predetermined period of time, and the speed are not limited to the values given here.

It is also possible to mount an on-board camera (such as a CCD camera) to the vehicle and determine whether there is traffic congestion based on various information from front or rear images captured by the on-board camera. This on-board camera outputs image data indicative of the captured image, which is used to determine whether there is an object in the captured direction, and if so, what kind of object it is, and the like. This image data is received by the control apparatus 4 which then determines whether there is traffic congestion by determining the number of vehicles in the surrounding area.

More specifically, it can be determined that there is traffic congestion when the number of vehicles in the surrounding area is equal to or greater than a predetermined number (such as when there are five or more vehicles within 100 metres in front of the vehicle and five or more vehicles within 100 metres in back of the vehicle) while the travelling speed of the vehicle is relatively low (e.g., 30 km/h or less) and the vehicle is not stopped. The predetermined number, the distance, and the speed are not limited to the values given here.

Also, a structure may be used in which clearance sonar emits ultrasonic waves out in front of the vehicle and receives those ultrasonic waves that reflect off of objects in their path, and then outputs a detection signal indicative of the presence of an object and the distance to the object and the like.

Moreover, the determination as to whether there is traffic congestion may also be made by mounting a receiver to the vehicle, which is capable of receiving information from a transmission source that transmits road traffic information.
Examples in Japan of such a road traffic information transmitting source include VICS (registered trademark) and other telematics systems (i.e., systems such as G-BOOK (registered trademark) and the like).

As described in Japanese Patent Application Publication No. 2004-108846 (JP-A-2004-108846), for example, the vehicle information and communication system referred to as VICS gathers information from traffic control systems of the police and the Japan Highway Public Corporation and the like and prepares road traffic information such as information related to road congestion and traffic restrictions and the like, which it then transmits via communicating means. That is, this system is a system that obtains traffic information provided by VICS centres via beacon receivers, FM multiple receive antennas, and mobile phones. Incidentally, VICS centres gather traffic information such as information related to road congestion using a multitude of cameras and sensors provided along main roads such as national and prefectural highways.

Also, the system referred to as G-BOOK is an information providing system for members, which connects to a network using special wireless devices and mobile phones and enables the members to obtain various information such as information relating to traffic congestion and the like.

- Other example embodiments - The example embodiments described above illustrate cases in which the invention is applied to a vehicle provided with the manual transmission 2. However, the invention is not limited to this. For example, the invention may also be applied to a vehicle provided with an automatic transmission having a manual shift function. This automatic transmission with a manual shift function is generally common. One example is a so-called sequential-shift transmission that upshifts and downshifts in response to a member being pulled forward and pushed backward.

Also, in the example embodiments described above, the lamps 11 and 12 and the display 13 are provided in the combination meter 3 as display portions for instructing the driver to shift. However, the locations where these are provided are not particularly limited. For example, instead of being located in the combination meter 3, the lamps 11 and 12 and the display 13 may be located near the combination meter 3 or displayed using a generally well-known navigation system or a head up display system that projects information on the front windscreen.

Also, in the example embodiments described above, the invention is applied to a 5-speed manual transmission, but the invention is not limited to this. For example, the invention may also be applied to a 4-speed manual transmission or a manual transmission with fewer than four speeds, or to a 6-speed manual transmission or a manual transmission with more than six speeds. Also, the engine 1 which is used in combination with the manual transmission 2 is not limited to a petrol engine. That is, it may also be a diesel engine.

Moreover, in the example embodiments described above, whether the driver is bothered by a shift instruction is determined by the frequency with which the driver shifts according to that shift instruction. However, the invention is not limited to this. That is, whether the driver is bothered by a shift instruction may also be determined by another method, and if it is determined that the driver is bothered by a shift instruction, that shift instruction may be cancelled. For example, means for determining eye movement or perspiration or the like of the driver may be provided and whether the driver is bothered by a shift instruction may be determined by that eye movement or perspiration or the like.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

## Claims

1. A vehicular gear shift indicator which is used in a vehicle provided with a transmission (2) capable of performing a manual shift, and gives a shift instruction to a driver to shift gears into an optimum gear when a shift instructing condition, in which the optimum gear of the transmission (2) obtained according to the operating state of the vehicle differs from the gear selected by the driver, is satisfied, **characterised by** comprising:
congestion determining means for determining whether a road on which the vehicle is travelling is congested; and
shift instruction cancelling means for cancelling the shift instruction to the driver when the congestion determining means determines that the road is congested.

2. A vehicular gear shift indicator which is used in a vehicle provided with a transmission (2) capable of performing a manual shift, and gives a shift instruction to a driver to shift gears into an optimum gear when a shift instructing condition, in which the optimum gear of the transmission (2) obtained according to the operating state of the vehicle differs from the gear selected by the driver, is satisfied, **characterised by** comprising:
congestion determining means for determining whether a road on which the vehicle is travelling is congested;
shift frequency detecting means for detecting the frequency with which the driver shifts according to the shift instruction; and
shift instruction cancelling means for cancelling the shift instruction to the driver when the congestion determining means determines that the road is congested and the shift frequency determining means determines that the frequency with which the driver shifts according to the shift instruction is equal to or less than a predetermined frequency.

3. The gear shift indicator according to claim 2, further comprising shift number determining means for determining the number of times the driver shifts,
wherein the shift instruction cancelling means cancels the shift instruction to the driver when the shift number determining means determines that the number of times the driver shifts is equal to or less than a predetermined number when the congestion determining means determines that the road is congested and the shift frequency determining means determines that the frequency with which the driver shifts according to the shift instruction is equal to or greater than a predetermined frequency.

4. The gear shift indicator according to claim 2 or 3, wherein:
the congestion determining means determines whether the road is congested during a first predetermined period;
the shift frequency determining means determines the frequency with which the driver shifts according to the shift instruction during a second predetermined period; and
the determination by the congestion determining means and the determination by the shift frequency determining means are made simultaneously.

5. The gear shift indicator according to any one of claims 1 to 4, wherein the congestion determining means determines that the road is congested based on one or more pieces of information, from among information relating to the running speed of the vehicle, the number of times the vehicle stops, the operating amount of a brake by the driver, the operating amount of a clutch by the driver, and the operating amount of an accelerator by the driver, during a predetermined congestion recognition determining period.

6. The gear shift indicator according to any one of claims 1 to 4, wherein the congestion determining means determines that the road is congested based on information relating to the running speed of the vehicle and information relating to the distance between the vehicle and a vehicle in front of the vehicle.

7. The gear shift indicator according to any one of claims 1 to 4, wherein the congestion determining means determines that the road is congested based on information relating to the running speed of the vehicle and information relating to a captured image of an area in front of or behind the vehicle which is obtained by on-board imaging means.

8. The gear shift indicator according to anyone of claims. 1 to 4, wherein the congestion determining means determines that the road is congested based on traffic information received from outside the vehicle.

9. The gear shift indicator according to claim 8, wherein the traffic information is transmitted from a traffic information transmitting source.

10. The gear shift indicator according to any one of claims 1 to 9, wherein the shift instruction cancelling means stops cancelling the shift instruction to the driver when the congestion determining means determines that the road is no longer congested and the shift instructing condition is satisfied.

11. A vehicular gear shift indicating method which is used in a vehicle provided with a transmission (2) capable of performing a manual shift, and gives a shift instruction to a driver to shift gears into an optimum gear when a shift instructing condition, in which the optimum gear of the transmission (2) obtained according to the operating state of the vehicle differs from the gear selected by the driver, is satisfied, **characterised by** comprising:
determining whether a road on which the vehicle is travelling is congested; and
cancelling the shift instruction to the driver when it is determined that the road is congested.

12. A vehicular gear shift indicating method which is used in a vehicle provided with a transmission (2) capable of performing a manual shift, and gives a shift instruction to a driver to shift gears into an optimum gear when a shift instructing condition, in which the optimum gear of the transmission (2) obtained according to the operating state of the vehicle differs from the gear selected by the driver, is satisfied, **characterised by** comprising:
determining whether a road on which the vehicle is travelling is congested;
detecting the frequency with which the driver shifts according to the shift instruction; and
cancelling the shift instruction to the driver when it is determined that the road is congested and it is determined that the frequency with which the driver shifts according to the shift instruction is equal to or less than a predetermined frequency.

13. A vehicular gear shift indicator which is used in a vehicle provided with a transmission (2) capable of performing a manual shift, and gives a shift instruction to a driver to shift gears into an optimum gear when a shift instructing condition, in which the optimum gear of the transmission (2) obtained according to the operating state of the vehicle differs from the gear selected by the driver, is satisfied, **characterised by** comprising:
vehicle speed determining means for determining the speed of the vehicle; and
shift instruction cancelling means for cancelling the shift instruction to the driver when the vehicle speed determining means determines that the vehicle speed is equal to or less than a predetermined speed.
